# EUROPEAN PATENT APPLICATION

(11) **EP 4 683 186 A1**
(43) Date of publication of application: **21.01.2026**
(21) Application number: 24835832.7
(22) Date of filing: 05.06.2024
(51) Int. Cl.: H02K 9/19

(54) **WOUND-FIELD ROTATING ELECTRICAL MACHINE**

(30) Priority: 06.07.2023 JP 2023111366
(71) Applicant: AISIN CORPORATION, Kariya-shi, Aichi 448-8650 (JP)
(72) Inventor: KITAO, Takuya, Kariya-shi, Aichi 448-8650 (JP); KAMEYAMA, Takuya, Kariya-shi, Aichi 448-8650 (JP); KOMATSU, Takuya, Kariya-shi, Aichi 448-8650 (JP)
(74) Representative: Kramer Barske Schmidtchen Patentanwälte PartG mbB
(86) International application number: PCT/JP2024/020549
(87) International publication number: WO 2025/009313

(57) **Abstract**

There is disclosed a wound-field rotating electrical machine, including: a stator; and a rotor rotatably disposed coaxially with the stator with a gap in a radial direction between the rotor and the stator. The rotor includes: a rotor core including a plurality of tooth portions provided in a circumferential direction; a field winding wound on the plurality of tooth portions; and non-magnetic members extending in an axial direction, in a plurality of slots formed between the plurality of tooth portions. Each of the non-magnetic members includes a cooling medium flow passage extending in the axial direction. The cooling medium flow passage has an inclined portion or a step portion between a first position in the axial direction and a second position, in the axial direction, that is closer to a center, in the axial direction, of the rotor core than the first position. The cooling medium flow passage has a radially outermost radial position that is located further toward a radially outer side, at the second position than at the first position, by the inclined portion or the step portion.

## Description

### TECHNICAL FIELD

The present disclosure relates to a wound-field rotating electrical machine.

### BACKGROUND ART

There is known a technique of spraying a liquid cooling medium from an axially outer side to an axial end portion (a portion protruding in an axial direction with respect to an end face of a rotor core) of a field winding.

### CITATION LIST

### PATENT LITERATURE

Patent Literature 1: WO 2018/095842 A

### SUMMARY OF INVENTION

### TECHNICAL PROBLEM

Incidentally, although a field winding extends entirely across an axial direction of a rotor core, oil supplied to an axial end portion of the field winding does not reach an axially middle portion of the field winding, and heat dissipation is less likely to be promoted. Thus, in the conventional technique as described above, it is difficult to effectively cool the entire field winding.

Therefore, in one aspect, the present disclosure allows effective cooling of an entire field winding in a wound-field rotating electrical machine.

### SOLUTION TO PROBLEM

In one aspect, there is provided a wound-field rotating electrical machine, including:
a stator; and
a rotor rotatably disposed coaxially with the stator with a gap in a radial direction between the rotor and the stator,
in which
the rotor includes:
   a rotor core including a plurality of tooth portions provided in a circumferential direction;
   a field winding wound on the plurality of tooth portions; and
   non-magnetic members extending in an axial direction, in a plurality of slots formed between the plurality of tooth portions,
   each of the non-magnetic members includes a cooling medium flow passage extending in the axial direction,
   the cooling medium flow passage has a first opening open in a direction intersecting the axial direction, in an axial range overlapping the rotor core as viewed in the radial direction,
   the cooling medium flow passage has an inclined portion or a step portion between a first position in the axial direction and a second position, in the axial direction, that is closer to a center, in the axial direction, of the rotor core than the first position, and
   the cooling medium flow passage has a radially outermost radial position that is located further toward a radially outer side, at the second position than at the first position, by the inclined portion or the step portion.

### ADVANTAGEOUS EFFECT OF INVENTION

In one aspect, according to the present disclosure, it is possible to effectively cool an entire field winding in a wound-field rotating electrical machine.

### BRIEF DESCRIPTION OF DRAWINGS

FIG. 1 is a configuration diagram showing a vehicle drive system including a drive device for a rotating electrical machine according to the present embodiment.
FIG. 2 is a schematic cross-sectional view showing part of a cross section of the rotating electrical machine.
FIG. 3 is a cross-sectional view of a rotor of the rotating electrical machine, and is a cross-sectional view showing part of the rotor, as taken along a plane including a rotation axis of the rotor.
FIG. 4 is a perspective view showing an extracted configuration in and around the area of one slot.
FIG. 5 is a perspective view of an oil passage forming member as viewed obliquely from a radially inner side, in the same view as FIG. 4.
FIG. 6 is a perspective view of the oil passage forming member as viewed obliquely from the radially inner side, in a view different from FIG. 4.
FIG. 7 is a perspective view showing part of an end member.
FIG. 8 is a view schematically showing flows of oil by using arrows and the like, in the cross-sectional view shown in FIG. 3.
FIG. 9 is a cross-sectional view as taken along a plane orthogonal to the rotation axis and passing through an in-slot opening, and is a cross-sectional view of part related to one slot.
FIG. 10 is an explanatory view for a first modification.
FIG. 11 is an explanatory view for a second modification.
FIG. 12 is an explanatory view for a third modification.
FIG. 13 is an explanatory view showing inclined portions of oil passages according to a modification.
FIG. 14 is an explanatory view showing inclined portions of an oil passage according to another modification.
FIG. 15 is an explanatory view showing inclined portions of oil passages according to another modification.
FIG. 16 is an explanatory view showing an inclined portion of an oil passage according to another modification.
FIG. 17 is an explanatory view showing inclined portions of oil passages according to another modification.
FIG. 18 is an explanatory view showing step portions of oil passages according to another modification.

### DESCRIPTION OF EMBODIMENTS

Hereinafter, each embodiment will be described in detail with reference to the accompanying drawings. Note that the dimensional ratios in the drawings are merely examples and the dimensional ratios are not limited thereto, and shapes and the like in the drawings may be partially exaggerated for convenience of description. In addition, in the drawings, only some of a plurality of portions having the same attribute may be denoted by reference signs for ease of viewing.

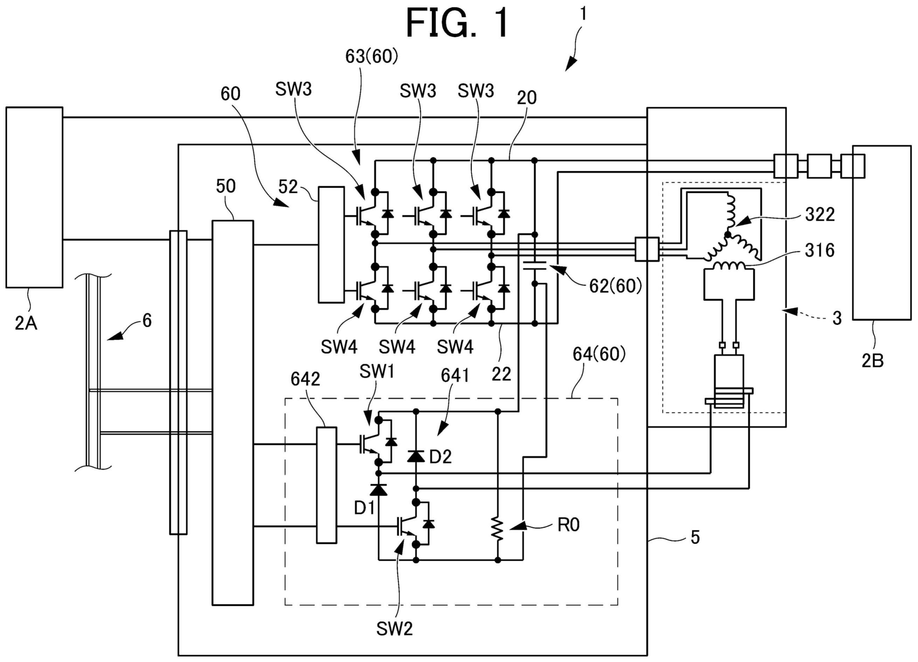

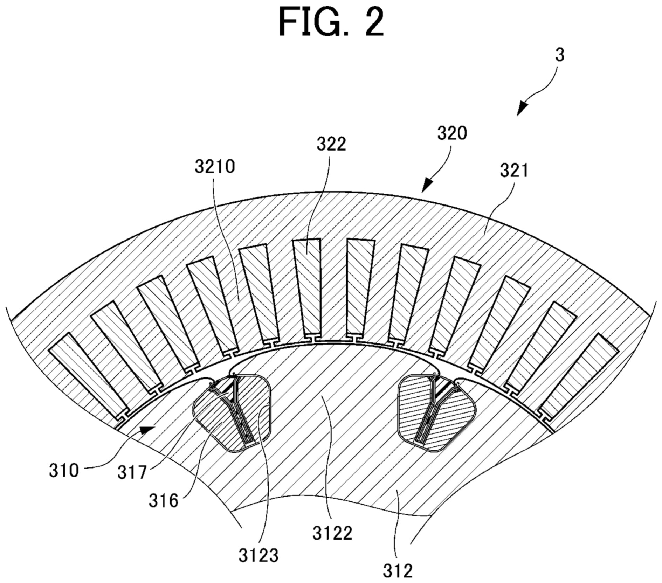

FIG. 1 is a configuration diagram showing a vehicle drive system 1 including a drive device 5 for a rotating electrical machine according to the present embodiment. FIG. 2 is a schematic cross-sectional view showing part of a cross section of a rotating electrical machine 3.

The vehicle drive system 1 has a two-power-supply configuration including a low-voltage battery 2A and a high-voltage battery 2B, and includes the rotating electrical machine 3 and the drive device 5.

The low-voltage battery 2A is, for example, a lead battery, and has a rated voltage of, for example, 12 V.

The high-voltage battery 2B is, for example, a lithium-ion battery, and has a rated voltage significantly higher than that of the low-voltage battery 2A, and, for example, has a rated voltage of 40 V or higher. In the present embodiment, as an example, the rated voltage of the high-voltage battery 2B is 300 V or higher. Note that the high-voltage battery 2B may be a fuel cell or the like.

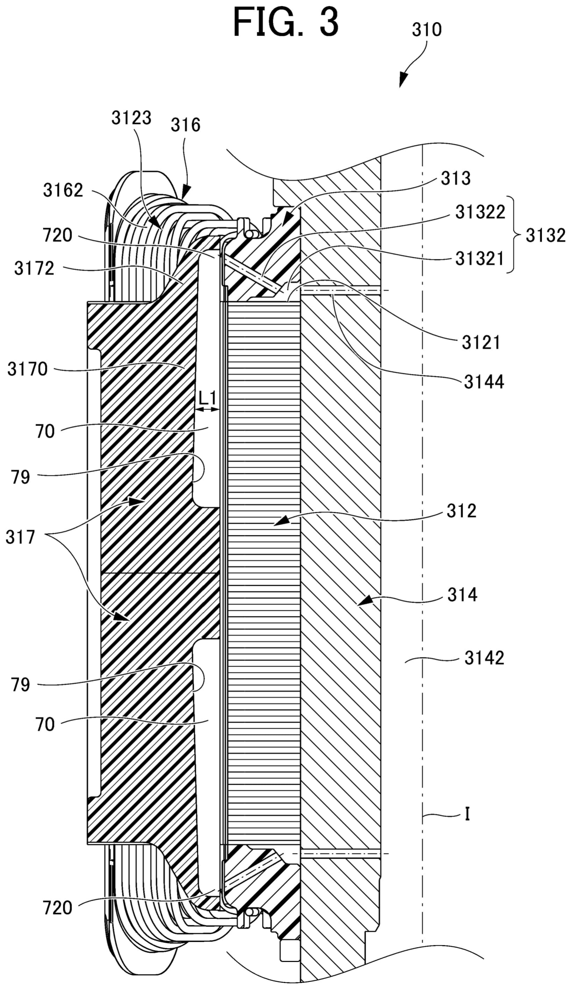

The rotating electrical machine 3 is of a wound-field type, and includes a rotor 310 and a stator 320. The rotor 310 is disposed on the radially inner side of the stator 320 coaxially with the stator 320 with a gap in the radial direction therebetween. The rotor 310 includes a rotor core 312 and a rotor winding 316. The rotor core 312 is coaxially fixed to a shaft portion 314 (see FIG. 3). Note that, as shown in FIG. 2, the rotor core 312 includes tooth portions 3122 protruding toward the radially outer side. A conductor wire forming the rotor winding 316 is wound on the tooth portion 3122. In addition, as shown in FIG. 2, stator windings 322 are wound on tooth portions 3210 of a stator core 321. Further details of the rotor 310 will be described later.

The drive device 5 includes a microcomputer 50 (hereinafter, referred to as a "microcomputer 50") and an electrical circuit part 60.

The microcomputer 50 may be implemented as, for example, an electronic control unit (ECU). The microcomputer 50 is connected to various electronic components (another ECU and a sensor) in a vehicle via a network 6 such as a controller area network (CAN).

The microcomputer 50 receives various commands including a control command from a higher-level ECU (not shown) via the network 6. The microcomputer 50 controls the rotating electrical machine 3 through the electrical circuit part 60, on the basis of the control command. The microcomputer 50 operates, on the basis of electrical power from the low-voltage battery 2A.

The electrical circuit part 60 includes a smoothing capacitor 62, a power conversion circuit part 63, and a power feeding circuit part 64.

The smoothing capacitor 62 is provided between a high-potential-side line 20 and a low-potential-side line 22 of the high-voltage battery 2B. A resistor R0 for passive discharge may be connected to both ends of the smoothing capacitor 62.

The power conversion circuit part 63 is in the form of an inverter, and forms, for example, a three-phase bridge circuit. The power conversion circuit part 63 is connected between the high-potential-side line 20 and the low-potential-side line 22 so as to be in parallel to the smoothing capacitor 62. The power conversion circuit part 63 includes switching elements SW3 of an arm on the high potential side and switching elements SW4 of an arm on the low potential side. The microcomputer 50 controls the switching elements SW3, SW4 through a drive circuit part 52.

The power feeding circuit part 64 includes a bridge circuit part 641 and a drive circuit part 642.

The bridge circuit part 641 is connected between the high-potential-side line 20 and the low-potential-side line 22 so as to be in parallel to the smoothing capacitor 62 and the resistor R0 for passive discharge. The bridge circuit part 641 includes a pair of switching elements SW1, SW2 and a pair of diodes D1, D2.

The switching element SW1 is connected in series to the diode D1 so as to be connected to a cathode, on the high potential side, of the diode D1. One end of the rotor winding 316 is connected between the switching element SW1 and the diode D1. In addition, the switching element SW2 is connected in series to the diode D2 so as to be connected to an anode, on the low potential side, of the diode D2. The other end of the rotor winding 316 is connected between the switching element SW2 and the diode D2. Hereinafter, in the pair of switching elements SW1, SW2, the switching element SW1 and the configuration related to the switching element SW1 may be expressed with "high potential side" for distinction, and the switching element SW2 and the configuration related to the switching element SW2 may be expressed with "low potential side".

An on or off state of the pair of switching elements SW1, SW2 is switched through the drive circuit part 642. The pair of switching elements SW1, SW2 change the energization state of the rotor winding 316 under the control of the drive circuit part 642. Each of the switching elements SW1, SW2 is, for example, an insulated gate bipolar transistor (IGBT), but may be another form such as a metal oxide semiconductor field-effect transistor (MOSFET).

The drive circuit part 642 drives a gate of the switching element SW1 on the high potential side, on the basis of a control signal from the microcomputer 50, and drives a gate of the switching element SW2 on the low potential side, on the basis of a control signal from the microcomputer 50.

Next, a characteristic configuration of the rotor 310 in the rotating electrical machine 3 of the present embodiment will be described with reference to FIG. 3 and subsequent drawings together with FIG. 2 described above.

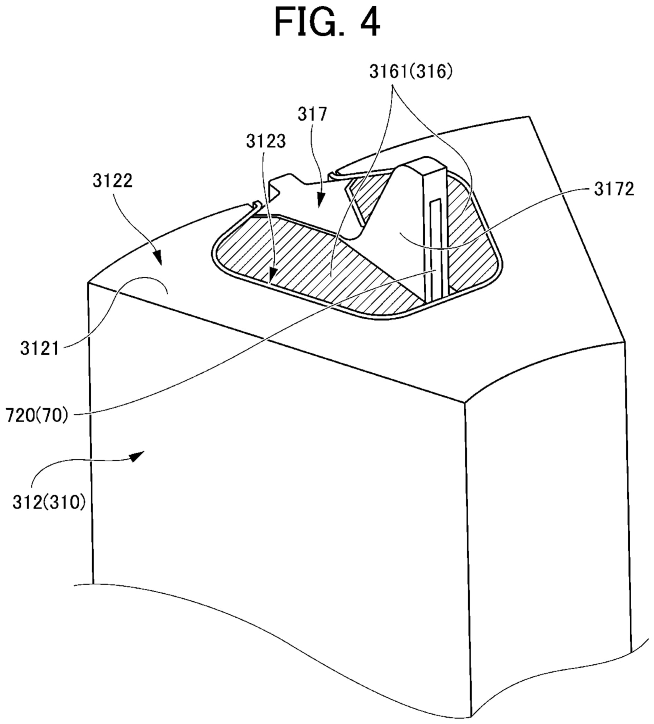

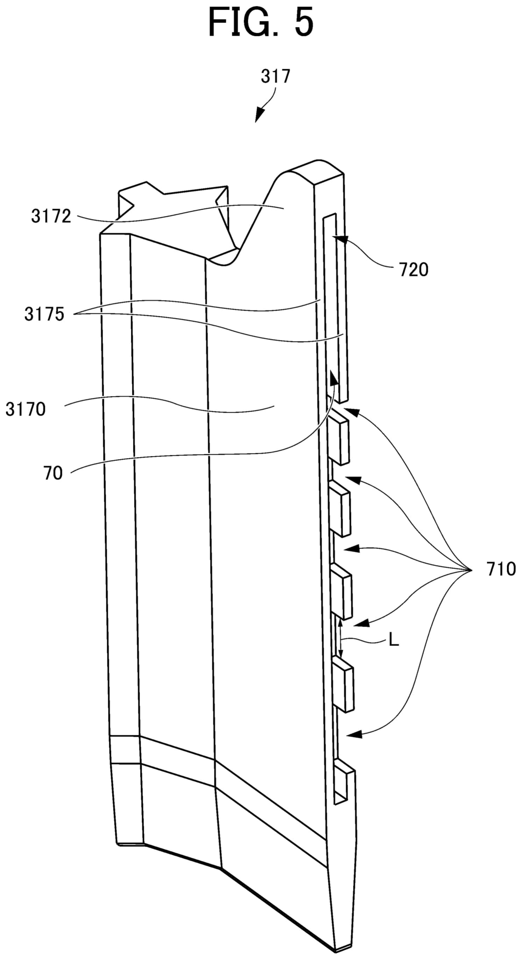

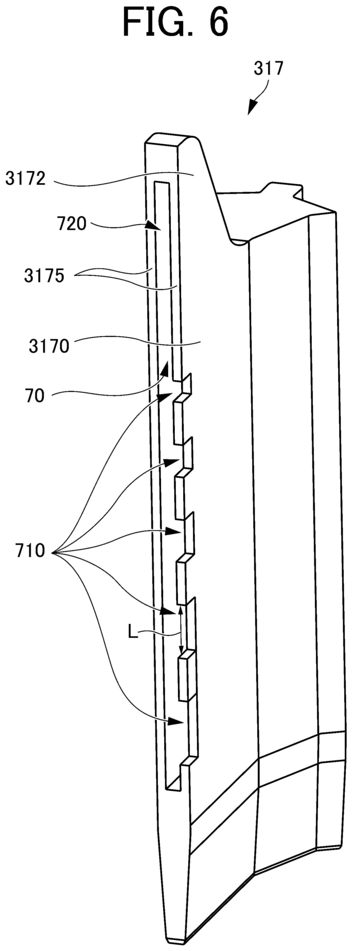

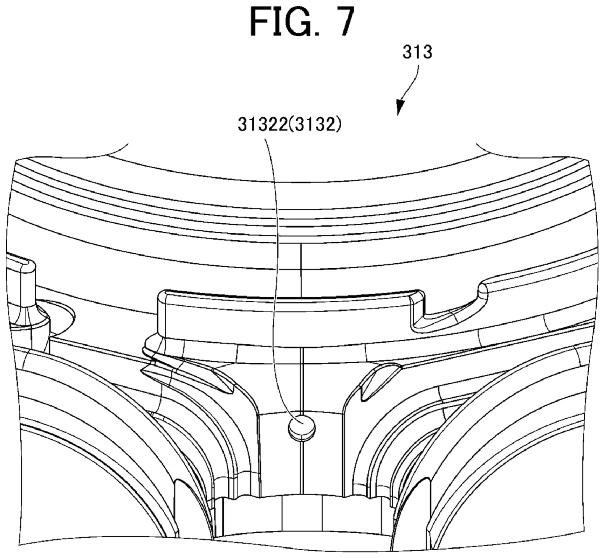

FIG. 3 is a cross-sectional view of the rotor 310 of the rotating electrical machine 3, and is a cross-sectional view showing part of the rotor 310 (half of part on one side in the radial direction with respect to a rotation axis I of the rotor 310), as taken along a plane including the rotation axis I. FIG. 4 is a perspective view showing an extracted configuration in and around the area of one slot 3123. In FIG. 4, the rotor winding 316 is shown schematically in cross section. FIG. 5 is a perspective view of an oil passage forming member 317 as viewed obliquely from the radially inner side, in the same view as FIG. 4. FIG. 6 is a perspective view of the oil passage forming member 317 as viewed obliquely from the radially inner side, in a view different from FIG. 4. FIG. 7 is a perspective view showing part of an end member 313 (part corresponding to a circumferential range of the one slot 3123).

In the following description, the axial direction refers to a direction in which the rotation axis I of the rotor 310 extends, and the radial direction refers to a radial direction centered on the rotation axis I. Therefore, the radially outer side refers to a side away from the rotation axis I, and the radially inner side refers to a side toward the rotation axis I. In addition, the axially outer side refers to a side away from the center, in the axial direction, of the stator 320, and the axially inner side refers to a side approaching the center, in the axial direction, of the rotor 310 (or the stator 320). Further, the circumferential direction corresponds to a rotation direction around the rotation axis I.

The rotor 310 is disposed on the radially inner side of the stator 320 (see FIG. 2) coaxially with the stator 320 with a gap in the radial direction therebetween. The rotor 310 includes the rotor core 312, the end members 313, the shaft portion 314, the rotor winding 316, and the oil passage forming members 317.

The rotor core 312 is coaxially fixed to the shaft portion 314. The rotor core 312 may be formed by stacking electromagnetic steel sheets, for example. As shown in FIG. 4, the rotor core 312 includes the tooth portions 3122 protruding toward the radially outer side. The conductor wire forming the rotor winding 316 is wound on the tooth portion 3122. In this case, the conductor wire forming the rotor winding 316 extends in the slot 3123 (see FIG. 4) formed between the tooth portions 3122 in the circumferential direction.

The end member 313 is provided so as to cover an axial end face 3121 of the rotor core 312 (an end face of the tooth portion 3122). The end member 313 may be formed by a combination of two members such as an end plate and a bobbin. In this case, the end plate may be made of metal such as aluminum, and the bobbin may be made of an insulation material such as resin. The end member 313 may have a function of holding an axial end portion 3162 of the rotor winding 316.

The end members 313 are provided on both sides in the axial direction. In the following description, the end member 313 on one side in the axial direction will be described unless otherwise stated, but the similar may apply to the end member 313 on the other side in the axial direction.

In the present embodiment, the end member 313 forms an oil passage 3132. The oil passage 3132 has a first oil passage portion 31321 and a second oil passage portion 31322.

The first oil passage portion 31321 is formed between the end member 313, the axial end face 3121 of the rotor core 312, and the shaft portion 314. The first oil passage portion 31321 may have an annular shape extending around the shaft portion 314.

The second oil passage portion 31322 is formed in the end member 313. The second oil passage portion 31322 is provided in a circumferential range of the slot 3123. The second oil passage portion 31322 may be provided for each slot 3123. The second oil passage portion 31322 extends in the radial direction. In this instance, the oil passage 3132 may extend in a direction perpendicular to the axial direction, or may extend in a direction forming an angle of less than 90 degrees with respect to the axial direction. In the present embodiment, as shown in FIG. 3, the second oil passage portion 31322 is inclined in such a manner that the second oil passage portion 31322 extends toward the axially outer side as it goes toward the radially outer side. In this instance, as shown in FIG. 3, a radially inner side end portion of the second oil passage portion 31322 communicates with an axis oil passage 3142 of the shaft portion 314 to be described later, and a radially outer side end portion of the second oil passage portion 31322 communicates with (is open to) an oil passage 70 to be described later.

The shaft portion 314 forms a rotation axis I. The rotor core 312 is fixed to the shaft portion 314.

In the present embodiment, the shaft portion 314 has a hollow structure, and forms the axis oil passage (hollow axis oil passage) 3142. The shaft portion 314 has a radial oil hole 3144 penetrating in the radial direction from the axis oil passage 3142. A radially inner side end portion of the radial oil hole 3144 is open to the axis oil passage 3142, and a radially outer side end portion of the radial oil hole 3144 communicates with (is open to) the first oil passage portion 31321 of the end member 313 described above.

The rotor winding 316 is wound on the rotor core 312 in such a manner as to be held by the end member 313 at the axial end portion 3162. The rotor winding 316 includes an in-slot placement portion 3161 (see FIG. 4) and the axial end portion 3162 (see FIG. 3). The in-slot placement portion 3161 extends in the slot 3123. The axial end portion 3162 protrudes in the axial direction with respect to the axial end face 3121 of the rotor core 312. Note that the axial end portion 3162 of the rotor winding 316 may be a form in which the radially outer side of the axial end portion 3162 protrudes toward the axially outer side more than the radially inner side of the axial end portion 3162.

The oil passage forming member 317 is made of a non-magnetic material such as a resin material. The oil passage forming member 317 is provided for each slot 3123, and extends in the axial direction in the corresponding slot 3123. The oil passage forming member 317 may contact the in-slot placement portion 3161 of the rotor winding 316 in the slot 3123. In this case, the oil passage forming member 317 may have a function of preventing positional misalignment (disorderly winding) of the rotor winding 316 and improving electrical insulation properties related to the rotor winding 316.

In the present embodiment, two oil passage forming members 317 are provided for each slot 3123. Specifically, as shown in FIG. 3, in one slot 3123, the two oil passage forming members 317 are provided in a relationship of abutting on each other in the axial direction. In this case, the respective oil passage forming members 317 can be inserted and assembled into one slot 3123 from both sides in the axial direction, and excellent assembling efficiency is obtained. The two oil passage forming members 317 may have the same form, and either one of the two oil passage forming members 317 will be representatively described below unless otherwise stated.

In the present embodiment, the oil passage forming member 317 includes an in-slot portion 3170 extending in the slot 3123 and a member end portion 3172 protruding with respect to the axial end face 3121 of the rotor core 312. The member end portion 3172 faces the end member 313 in the radial direction from the radially outer side of the end member 313.

In the present embodiment, the oil passage forming member 317 further forms the oil passage 70.

As shown in FIGS. 3, 5, and the like, the oil passage 70 extends in the axial direction. The oil passage forming member 317 includes side walls 3175 on both sides in the circumferential direction in such a manner that the oil passage 70 is formed between the side walls 3175 extending in the axial direction.

The oil passage 70 extends in an axial range overlapping the rotor core 312 as viewed in the radial direction. Specifically, the oil passage 70 is formed in the in-slot portion 3170 of the oil passage forming member 317. In the present embodiment, as shown in FIG. 4 and the like, the oil passage 70 is also formed in the member end portion 3172 in addition to the in-slot portion 3170 of the oil passage forming member 317.

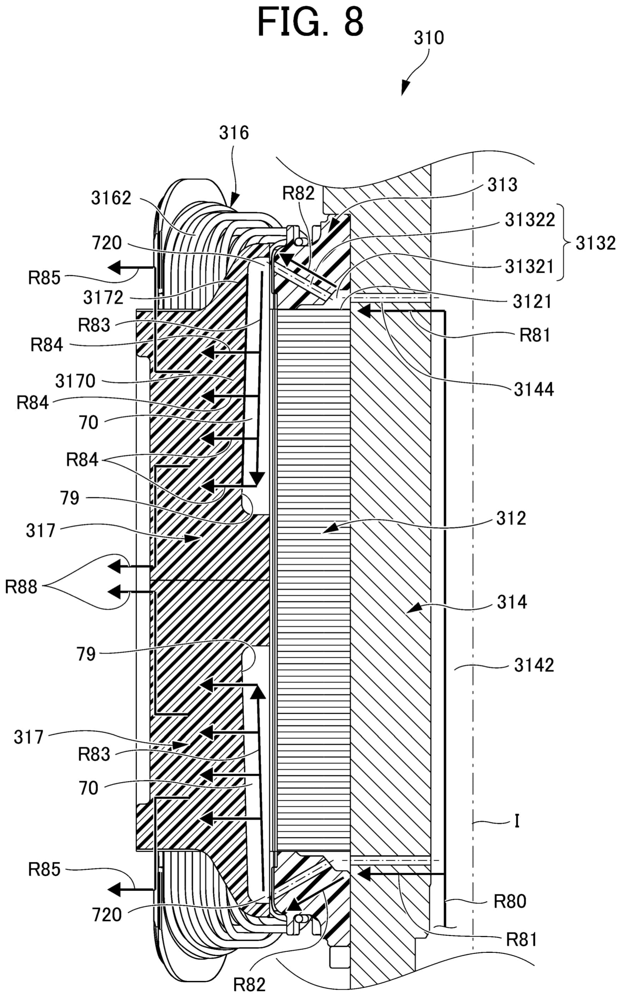

The oil passage 70 has a radially outermost radial position (a dimension in the radial direction when a position on the rotation axis I is set to "0"), and preferably, the radially outermost radial position is not constant, and changes. Note that the radially outermost radial position of the oil passage 70 is a radial position of a groove bottom portion in the oil passage 70 in a form of a groove portion. Specifically, as shown in FIG. 3, the oil passage 70 is preferably formed such that the radially outermost radial position thereof is located toward the radially outer side as it goes toward the axially inner side. That is, the oil passage 70 has an inclined portion 79, whereby the radially outermost radial position of the oil passage 70 is located further toward the radially outer side, at an axial position of the inclined portion 79 on the center side in the axial direction (an example of a "second position") than at an axial position of the inclined portion 79 on the axially outer side (an example of a "first position"). In the present embodiment, a radially innermost radial position of the oil passage 70 is entirely the same across the axial direction, and thus a dimension L1 of the oil passage 70 in the radial direction increases toward the axially inner side. The technical significance of such a configuration will be described later with reference to FIG. 8.

The oil passage 70 has openings 710 (hereinafter, each also referred to as "in-slot opening 710") that are open in a direction intersecting the axial direction, in an axial range overlapping the rotor core 312 as viewed in the radial direction. The "direction intersecting the axial direction" is not limited to a direction orthogonal to the axial direction, and refers to a direction forming an angle of less than 90 degrees (however, an angle of more than 0 degrees) with respect to the axial direction. In the present embodiment, the in-slot openings 710 are open in the circumferential direction as shown in FIGS. 5 and 6.

The in-slot opening 710 may be formed so as to be continuous in the axial direction, or may be formed such that the in-slot openings 710 are separated from each other at a plurality of different positions along the axial direction as shown in FIGS. 5 and 6. The in-slot openings 710 at the respective axial positions may have the same opening shape, or some or all of the in-slot openings 710 thereat may have different opening shapes as shown in FIGS. 5 and 6.

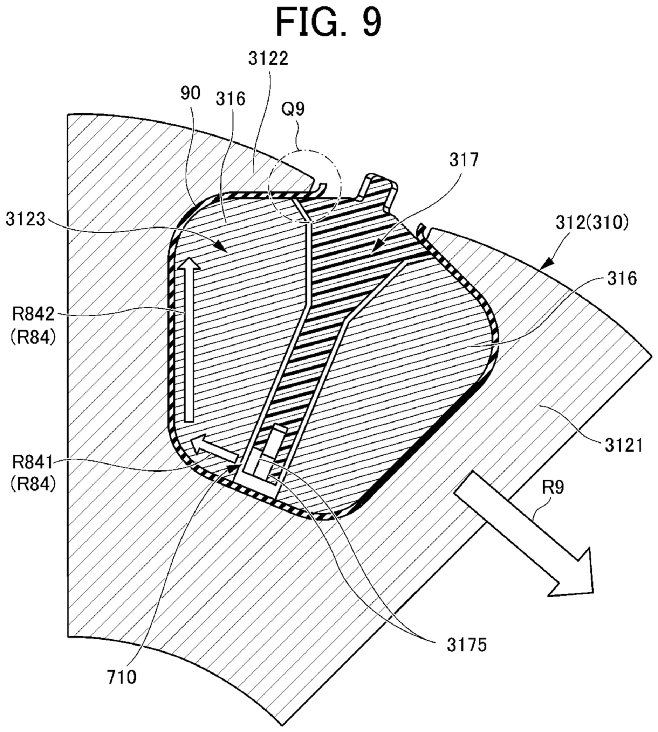

The in-slot opening 710 may be formed in each of the side walls 3175 on both sides in the circumferential direction, but is preferably formed only in the side wall 3175 on one side out of the side walls 3175 on both sides in the circumferential direction as shown in FIGS. 5 and 6. The technical significance of such a configuration will be described later with reference to FIG. 9.

The oil passage 70 has an inlet opening 720. The inlet opening 720 is located on the axially outer side relative to the axial end face 3121 of the rotor core 312. That is, the inlet opening 720 is formed in the member end portion 3172 of the oil passage forming member 317. Thus, it is possible to simplify a supply structure for supplying oil to the inlet opening 720 of the oil passage 70.

The inlet opening 720 is open toward the radially inner side. The oil passage 70 communicates with the axis oil passage 3142 of the shaft portion 314 via the inlet opening 720. More specifically, the inlet opening 720 is continuous with the second oil passage portion 31322 of the end member 313 described above. In this case, the oil passage 70 communicates with the axis oil passage 3142 of the shaft portion 314 via the oil passage 3132.

Next, flows of oil related to the rotating electrical machine 3 of the present embodiment will be described with reference to FIGS. 8 and 9.

FIG. 8 is a view schematically showing flows of oil by using arrow R80 and the like, in the cross-sectional view shown in FIG. 3. FIG. 9 is a cross-sectional view as taken along a plane orthogonal to the rotation axis I and passing through the in-slot opening 710, and is a cross-sectional view of part related to one slot 3123. Note that, in FIG. 8, for convenience of ease of viewing, arrow R80 may be shown offset from the passing hole.

In the present embodiment, oil is supplied to the axis oil passage 3142 through an oil pump (not shown) (arrow R80), and flows toward the radially outer side from the axis oil passage 3142 through the radial oil hole 3144 by centrifugal force (centrifugal force due to rotation of the rotor 310) (arrow R81). The oil flowing toward the radially outer side through the radial oil hole 3144 reaches the oil passage 3132 of the end member 313, and flows toward the radially outer side similarly by centrifugal force (arrow R82). The oil flowing toward the radially outer side through the oil passage 3132 of the end member 313 reaches the inlet opening 720 of the oil passage 70, and is introduced into the oil passage 70. In this manner, in the present embodiment, oil can be supplied to the oil passage 70 from the axially outer side with respect to the axial end face 3121 of the rotor core 312.

In the present embodiment, as described above, the radial position of the bottom portion of the oil passage 70 on the radially outer side is located toward the radially outer side as it goes toward the axially inner side. Therefore, the oil introduced into the oil passage 70 flows toward the axially inner side by centrifugal force (arrow R83). Then, the oil inside the oil passage 70 flows toward the axially inner side, and simultaneously flows out into the slot 3123 through the in-slot opening 710 as shown in FIG. 9 (arrow R84). That is, the oil is supplied into the slot 3123 via the oil passage 70.

In the present embodiment, as described above, the in-slot opening 710 is formed on one side of the side walls 3175 on both sides in the circumferential direction. Specifically, the in-slot opening 710 is formed in the oil passage forming member 317, on a trailing side instead of a leading side in the rotation direction of the rotor 310 at the time when the vehicle moves forward. In FIG. 9, the rotation direction of the rotor 310 at the time when the vehicle moves forward is schematically indicated by arrow R9. The oil flows in the circumferential direction to the trailing side (arrow R841) at the time of acceleration of the rotor 310 in the rotation direction, and flows out from the in-slot opening 710 into the slot 3123. The oil supplied into the slot 3123 flows toward the radially outer side by centrifugal force, while passing through the rotor winding 316 or between the rotor core 312 and the rotor winding 316 (arrow R842). At this time, the oil can cool the rotor winding 316 by coming into contact with the rotor winding 316.

Here, as shown in FIG. 9, the oil passage forming member 317 has a wedge shape as viewed in the axial direction, and a radially outer side end portion thereof abuts on the tooth portion 3122 of the rotor core 312 in the radial direction as shown in Q9 part of FIG. 9. Note that, in the example shown in FIG. 9, the oil passage forming member 317 abuts on the tooth portion 3122 of the rotor core 312 in the radial direction, through an insulation paper 90 provided between the rotor core 312 and the rotor winding 316. Therefore, the oil flowing toward the radially outer side in the slot 3123 does not significantly flow out from between the oil passage forming member 317 and the tooth portion 3122 of the rotor core 312. As a result, the oil flows toward the radially outer side, on the axially outer side with respect to the axial end face 3121 of the rotor core 312 (arrow R85 in FIG. 8). Also at this time, the oil supplied into the slot 3123 can cool the rotor winding 316 by coming into contact with the rotor winding 316.

In this manner, according to the present embodiment, the oil passage forming member 317 is provided in the slot 3123, and the oil passage 70 as described above is formed in the oil passage forming member 317. Thus, the rotor winding 316 can be cooled from the axial end portion 3162 to an axially middle portion (across a wide range in the axial direction) of the rotor winding 316 by the oil supplied from the outer side with respect to the axial end face 3121 of the rotor core 312. As a result, the entire rotor winding 316 can be effectively cooled.

Incidentally, the in-slot openings 710 have a function of distributing oil in the axial direction by being provided at the plurality of positions in the axial direction as described above. For example, in a case where an amount of oil distributed to the axially middle portion of the rotor winding 316 is made relatively large, an opening area (or the number) of the in-slot openings 710 may be made larger than the axial end portion 3162. Alternatively, an arrangement and/or shapes of the in-slot openings 710 may be adapted to equalize an amount of oil supplied at each position of the rotor winding 316 in the axial direction. The opening area of the in-slot opening 710 can be adjusted by a length of the in-slot opening 710 in the axial direction, a radial position of an opening edge portion of the in-slot opening 710 on the radially outer side (a position with respect to the bottom portion of the oil passage 70 on the radially outer side), or the like. In this respect, the oil inside the oil passage 70 tends to flow along a surface of the oil passage 70 on the radially outer side (a bottom face of the groove portion) by centrifugal force. Thus, it can be expected that an amount of oil flowing out from the in-slot opening 710 into the slot 3123 increases, as the radial position of the opening edge portion of the in-slot opening 710 on the radially outer side approaches the bottom portion of the oil passage 70 on the radially outer side. Therefore, a manner of distribution of the oil in the axial direction may be adapted to a desired manner by adjusting the radial position of the opening edge portion of the in-slot opening 710 on the radially outer side. For example, the radial position of the opening edge portion of the in-slot opening 710 on the radially outer side may be farther from the bottom portion of the oil passage 70 on the radially outer side (that is, may be located on the radially inner side) as it goes toward the axially outer side. With this, it is possible to relatively reduce the amount of oil flowing out into the slot 3123 through the in-slot opening 710 located at an axial position on the axially outer side, in the oil supplied to the oil passage 70 from the axially outer side. As a result, it is possible to easily obtain a necessary amount for oil flowing out into the slot 3123 through the in-slot opening 710 located at an axial position on the axially inner side.

In this respect, in the present embodiment, as shown in FIGS. 5 and 6, a length (opening dimension) L, in the axial direction, of the in-slot opening 710 located at an axial position on the axially inner side is larger than that of the in-slot opening 710 located at an axial position on the axially outer side. With this, it is possible to relatively reduce the amount of oil flowing out into the slot 3123 through the in-slot opening 710 located at an axial position on the axially outer side, in the oil supplied to the oil passage 70 from the axially outer side. As a result, it is possible to easily obtain a necessary amount for oil flowing out into the slot 3123 through the in-slot opening 710 located at an axial position on the axially inner side.

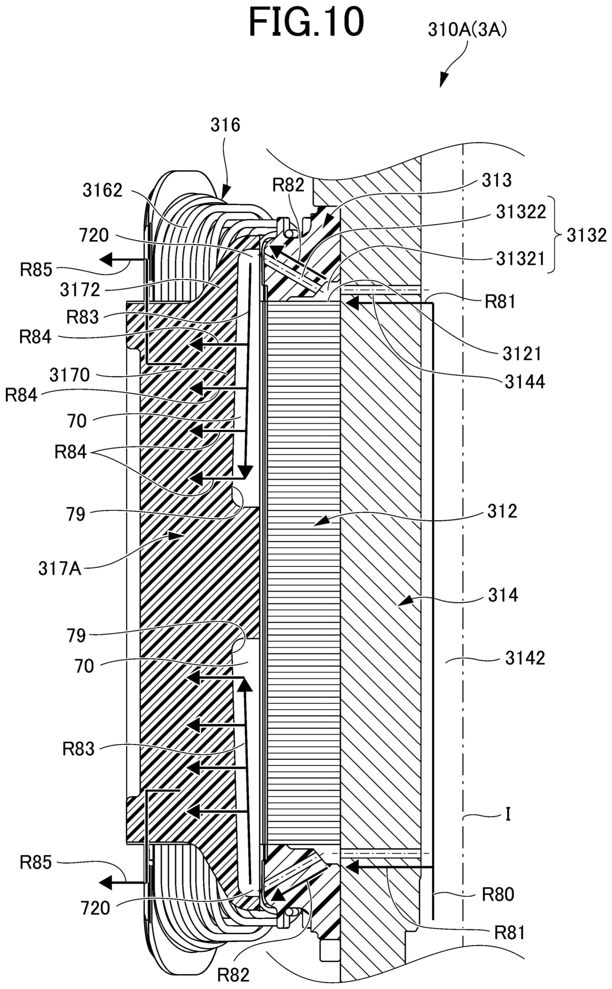

Next, various modifications to the embodiment described above will be described with reference to FIG. 10 and subsequent drawings. In the following description of the various modifications, constituent elements that may be similar to those in the embodiment described above are denoted by the same reference signs, and description thereof may be omitted.

FIG. 10 is an explanatory view for a first modification, and is a cross-sectional view of a rotor 310A of a rotating electrical machine 3A, as with FIG. 3, and is a cross-sectional view showing part of the rotor 310A (half of part on one side in the radial direction with respect to the rotation axis I), as taken along a plane including the rotation axis I of the rotor 310A.

The rotor 310A of the rotating electrical machine 3A according to the first modification is different from the rotor 310 of the rotating electrical machine 3 according to the embodiment described above in that the oil passage forming member 317 is replaced with an oil passage forming member 317A.

The oil passage forming member 317A according to the first modification is different from the oil passage forming member 317 according to the embodiment described above in that the oil passage forming member 317A is in the form of a one-piece member. That is, in the embodiment described above, the oil passage forming member 317 is provided in one slot 3123 in such a manner that the two oil passage forming members 317 abut on each other in the axial direction, whereas in the first modification, the oil passage forming member 317A in the form of a one-piece member is provided in one slot 3123. That is, the oil passage forming member 317A has a form in which the two oil passage forming members 317 are integrated.

In FIG. 10, flows of oil in the first modification are schematically shown by arrow R80 and the like. The flows of oil in the first modification are substantially similar to those in the embodiment described above with reference to FIG. 8, but are different from those in the embodiment described above only in the following points.

In the embodiment described above, since the two oil passage forming members 317 are disposed adjacent to each other in the axial direction, a path of oil passing between the two oil passage forming members 317 in the axial direction is likely to be formed (see arrow R88 in FIG. 8). In addition, there is also a possibility that a gap in the axial direction between the two oil passage forming members 317 becomes relatively large due to assembly tolerance, manufacturing tolerance, or the like for the two oil passage forming members 317. In a case where such a path for the oil passage is formed, oil is present between the rotor 310 and the stator 320 in the radial direction, and the oil tends to become resistance to the rotation of the rotor 310 and loss (so-called drag loss) tends to increase.

In contrast, according to the first modification, since the oil passage forming member 317A is a one-piece member, such loss can be prevented.

Note that, in the example shown in FIG. 10, the two oil passages 70 opposing each other in the axial direction in the one slot 3123 are separated from each other, but may be continuous with each other. The similar applies to the embodiment described above.

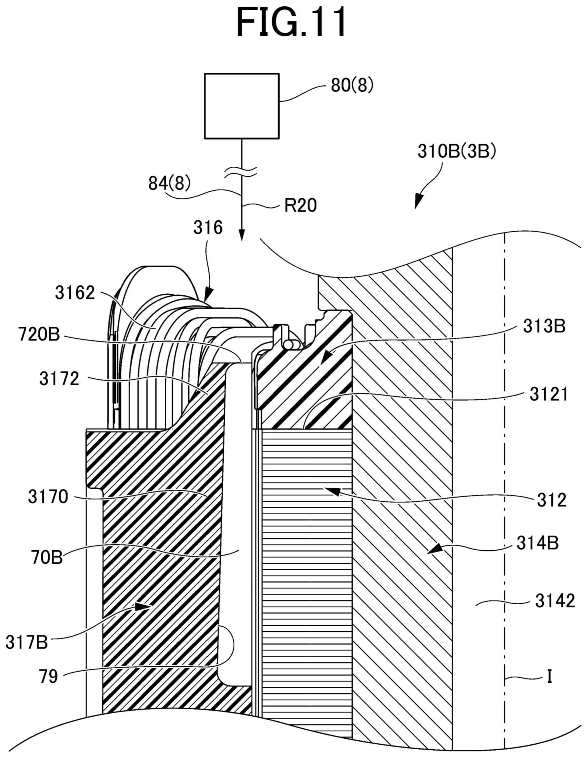

FIG. 11 is an explanatory view for a second modification, and is a cross-sectional view of a rotor 310B of a rotating electrical machine 3B, and is a cross-sectional view showing part of the rotor 310B (half of part on one side in the radial direction with respect to the rotation axis I, and part on one side in the axial direction), as taken along a plane including the rotation axis I of the rotor 310B.

The rotor 310B of the rotating electrical machine 3B according to the second modification is different from the rotor 310 of the rotating electrical machine 3 according to the embodiment described above in that the shaft portion 314, the end member 313, and the oil passage forming member 317 are respectively replaced with a shaft portion 314B, an end member 313B, and an oil passage forming member 317B.

The shaft portion 314B is different from the shaft portion 314 according to the embodiment described above in that the radial oil hole 3144 is omitted.

The end member 313B is different from the end member 313 according to the embodiment described above in that the oil passage 3132 is omitted.

The oil passage forming member 317B is different from the oil passage forming member 317 according to the embodiment described above in that the oil passage 70 is replaced with an oil passage 70B.

The oil passage 70B is different from the oil passage 70 according to the embodiment described above in that the inlet opening 720 is replaced with an inlet opening 720B.

Unlike the inlet opening 720 of the oil passage forming member 317 described above, the inlet opening 720B is open toward the axially outer side. That is, the oil passage forming member 317B is formed such that the oil passage 70B in the axial direction penetrates in the axial direction.

FIG. 11 schematically shows an oil supply device 8. As schematically shown in FIG. 11, the oil supply device 8 includes an oil pump 80 that pumps oil to the rotating electrical machine 3B and the like. The oil pump 80 may be a mechanical oil pump that is rotated at the time of operation of the rotating electrical machine 3 or the like, or may be an electrical oil pump. In addition, the oil supply device 8 may include a combination of a mechanical oil pump and an electrical oil pump. Further, the oil supply device 8 may include an oil cooler for decreasing the temperature of oil discharged from the oil pump 80, a strainer, or the like. Note that such an oil pump 80 and the like may be similarly used in the embodiment described above (that is, may be used for supplying the oil related to arrow R81 shown in FIG. 8).

In the second modification, the oil supply device 8 includes an oil passage 84 that supplies oil discharged from the oil pump 80 toward the inlet opening 720B of the oil passage forming member 317B. The oil passage 84 may be formed in a case (not shown), may be formed of a tubular member such as a pipe, or may be implemented by a combination of the oil passage in the case and the tubular member. The oil passage 84 communicates with the oil pump 80, at one end thereof, and communicates with a peripheral space of the axial end portion 3162 of the rotor winding 316, at the other end thereof. For example, the oil passage 84 may have an ejection hole (not shown) facing, in the axial direction, the axially outer side of the inlet opening 720B of the oil passage forming member 317B. In this case, oil may be sprayed from the ejection hole in the axial direction toward the inlet opening 720B of the oil passage forming member 317B by an oil pressure increased by the oil pump 80 (see arrow R20 in FIG. 8). As a result, oil can be supplied to the oil passage 70B in the oil passage forming member 317B via the inlet opening 720B. Also in this case, the oil can be supplied to the oil passage 70B from the axially outer side with respect to the axial end face 3121 of the rotor core 312. The flows of oil after being supplied to the oil passage 70B may be similar to those in the embodiment described above with reference to FIGS. 8 and 9.

According to also such a second modification, effects similar to those in the embodiment described above can be obtained.

Note that the second modification can be combined with the embodiment described above. That is, the oil passage forming member 317B may have the inlet opening 720 in addition to the inlet opening 720B. In this case, the end member 313B may be similar to the end member 313 according to the embodiment described above, and the shaft portion 314B may be similar to the shaft portion 314 according to the embodiment described above.

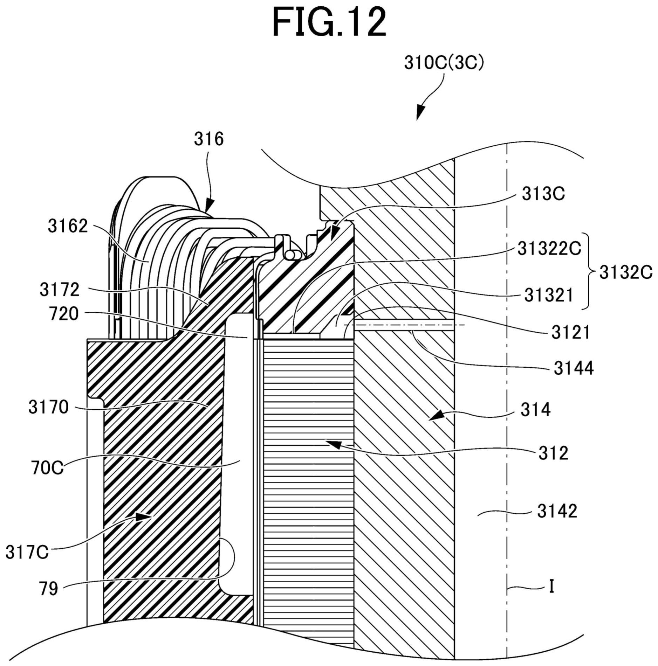

FIG. 12 is an explanatory view for a third modification, and is a cross-sectional view of a rotor 310C of a rotating electrical machine 3C, and is a cross-sectional view showing part of the rotor 310C (half of part on one side in the radial direction with respect to the rotation axis I, and part on one side in the axial direction), as taken along a plane including the rotation axis I of the rotor 310C.

The rotor 310C of the rotating electrical machine 3C according to the third modification is different from the rotor 310 of the rotating electrical machine 3 according to the embodiment described above in that the end member 313 is replaced with an end member 313C and the oil passage forming member 317 is replaced with an oil passage forming member 317C.

The end member 313C is different from the end member 313 according to the embodiment described above in that the oil passage 3132 is replaced with an oil passage 3132C.

The oil passage 3132C is different from the oil passage 3132 according to the embodiment described above in that the second oil passage portion 31322 is replaced with a second oil passage portion 31322C. As shown in FIG. 12, the second oil passage portion 31322C is formed between the end member 313C and the axial end face 3121 of the rotor core 312 in the axial direction, and extends in the radial direction. A radially inner side end portion of the second oil passage portion 31322C is connected to the first oil passage portion 31321 and a radially outer side end portion of the second oil passage portion 31322C is connected to an oil passage 70C of the oil passage forming member 317C.

The oil passage forming member 317C is different from the oil passage forming member 317 according to the embodiment described above in that the oil passage 70 is replaced with the oil passage 70C.

Note that, in the third modification, the oil passage 70C may end more at the axially inner side than the oil passage 70 according to the embodiment described above. That is, the oil passage 70C may have the inlet opening 720 more on the axially inner side than that of the oil passage 70 according to the embodiment described above. Also in this case, oil can be supplied to the oil passage 70C from the axially outer side with respect to the axial end face 3121 of the rotor core 312.

According to also such a third modification, effects similar to those in the embodiment described above can be obtained.

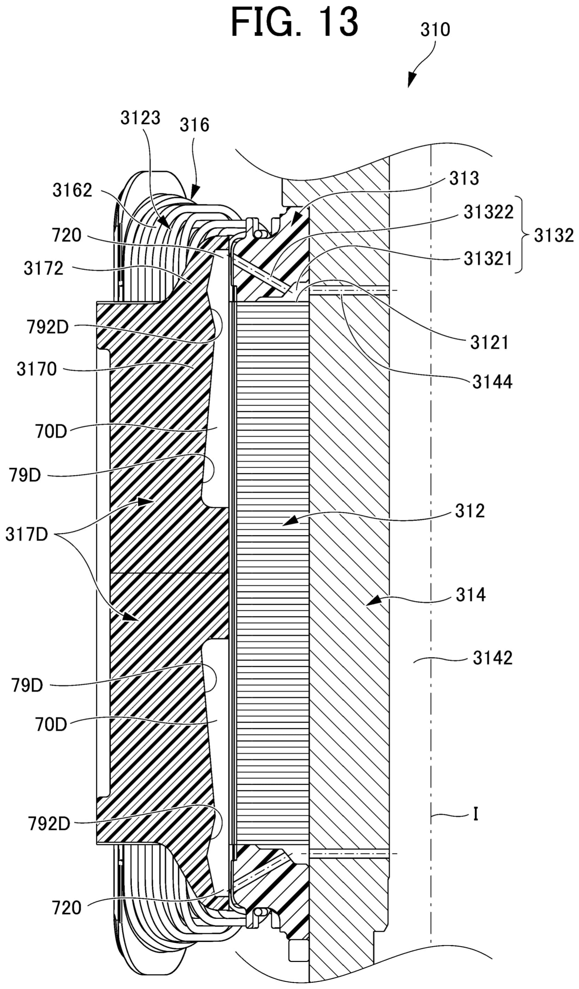

Next, various modifications to the inclined portion 79 of the oil passage 70 (the similar applies to the oil passages 70B, 70C) described above will be described with reference to FIG. 13 and subsequent drawings.

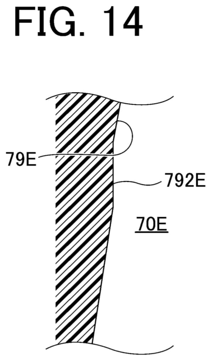

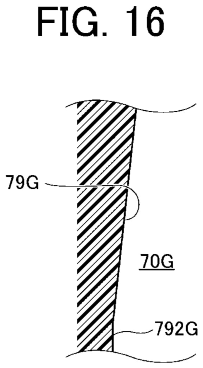

FIGS. 13 to 18 are explanatory views respectively showing inclined portions 79D to 79H and step portions 79I of oil passages 70D to 70I according to the various modifications. Among FIGS. 13 to 18, FIGS. 14 and 16 are cross-sectional views similar to FIG. 11 described above, and FIGS. 14 and 16 are simplified views each showing only relevant part. Hereinafter, as with the inclined portion 79 described above, an inclined portion having a direction, as it goes toward the center side in the axial direction, inclined toward the radially outer side is also referred to as an "outwardly inclined portion".

In the example shown in FIG. 13, a configuration is made in which an oil passage forming member 317D has the oil passage 70D, and in which the outwardly inclined portions 79D of the oil passage 70D are discontinuous in the axial direction, and are separated via part of an oil passage section in the axial direction. In this case, an inversely inclined portion 792D is formed in the part of the oil passage section in the axial direction. That is, inversely to the outwardly inclined portion 79D, the inclined portion 792D is directed to be located toward the radially inner side as it extends toward the center side in the axial direction. The oil passage 70D has the two separated outwardly inclined portions 79D, whereby, also in this case, a difference in radial positions occurs in the oil passage 70D at both axial end positions of each of the outwardly inclined portions 79D. That is, the radially outermost radial position of the oil passage 70D is located further toward the radially outer side, at an axial position of the outwardly inclined portion 79D on the center side in the axial direction (an example of the "second position") than at an axial position of the outwardly inclined portion 79D on the axially outer side (an example of the "first position"). Thus, also in this case, oil can be moved to the axially inner side by centrifugal force, due to the outwardly inclined portion 79D. Therefore, effects similar to those in the embodiment described above can be obtained. In addition, by providing the inversely inclined portion 792D at the part in the axial direction, a thickness necessary at the time of resin molding of the oil passage forming member 317D is easily obtained, and improvement in moldability can be expected.

In the example shown in FIG. 14, a configuration is made in which the outwardly inclined portions 79E of the oil passage 70E are discontinuous in the axial direction, and are separated via part of an oil passage section in the axial direction. In this case, a non-inclined portion 792E is formed in the part of the oil passage section in the axial direction. The oil passage 70E has the two separated outwardly inclined portions 79E, whereby, also in this case, a difference in radial positions occurs in the oil passage 70E at both axial end positions of each of the outwardly inclined portions 79E. That is, the radially outermost radial position of the oil passage 70E is located further toward the radially outer side, at an axial position of the outwardly inclined portion 79E on the center side in the axial direction (an example of the "second position") than at an axial position of the outwardly inclined portion 79E on the axially outer side (an example of the "first position"). Thus, also in this case, oil can be moved to the axially inner side by centrifugal force, due to the outwardly inclined portion 79E. Therefore, effects similar to those in the embodiment described above can be obtained.

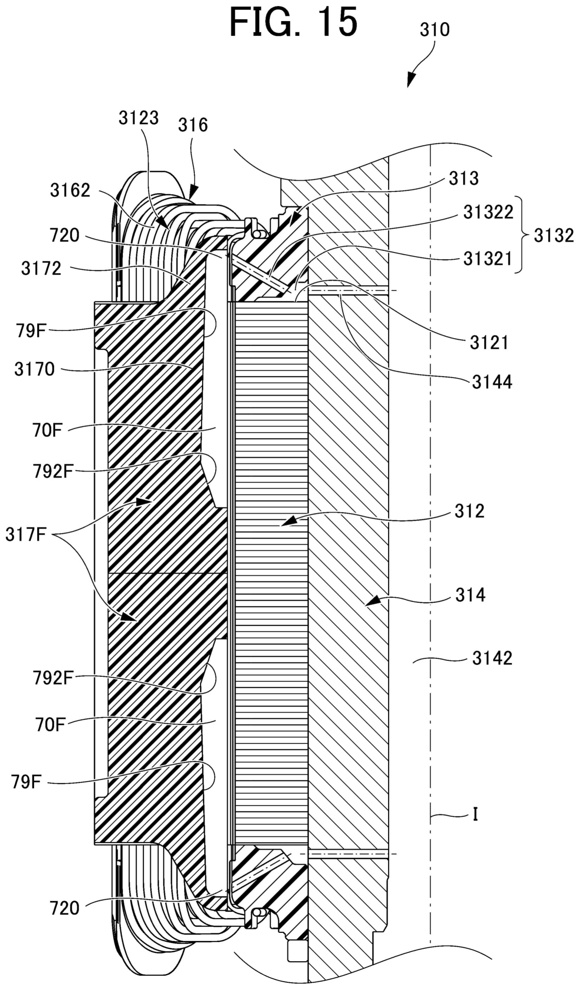

In the example shown in FIG. 15, a configuration is made in which an oil passage forming member 317F has the oil passage 70F, and in which the outwardly inclined portion 79F of the oil passage 70F is not formed in an oil passage section on the center side in the axial direction. In this case, an inversely inclined portion 792F is formed in a section on the center side in the axial direction. That is, inversely to the outwardly inclined portion 79F, the inclined portion 792F is directed to be located toward the radially inner side as it extends toward the center side in the axial direction. The oil passage 70F has the outwardly inclined portion 79F, whereby, also in this case, a difference in radial positions occurs at both axial end positions of the outwardly inclined portion 79F. That is, the radially outermost radial position of the oil passage 70F is located further toward the radially outer side, at an axial position of the outwardly inclined portion 79F on the center side in the axial direction (an example of the "second position") than at an axial position of the outwardly inclined portion 79F on the axially outer side (an example of the "first position"). Thus, also in this case, oil can be moved to the axially inner side by centrifugal force, due to the outwardly inclined portion 79F. Therefore, effects similar to those in the embodiment described above can be obtained. In addition, by providing the inversely inclined portion 792F on the center side in the axial direction, a thickness necessary at the time of resin molding of the oil passage forming member 317F is easily obtained, and improvement in moldability can be expected.

In the example shown in FIG. 16, a configuration is made in which the outwardly inclined portion 79G of the oil passage 70G is not formed in an oil passage section on the center side in the axial direction. In this case, a non-inclined portion 792G is formed in a section on the center side in the axial direction. The oil passage 70G has the outwardly inclined portion 79G, whereby, also in this case, a difference in radial positions occurs at both axial end positions of the outwardly inclined portion 79G. That is, the radially outermost radial position of the oil passage 70G is located further toward the radially outer side, at an axial position of the outwardly inclined portion 79G on the center side in the axial direction (an example of the "second position") than at an axial position of the outwardly inclined portion 79G on the axially outer side (an example of the "first position"). Thus, also in this case, oil can be moved to the axially inner side by centrifugal force, due to the outwardly inclined portion 79G. Therefore, effects similar to those in the embodiment described above can be obtained.

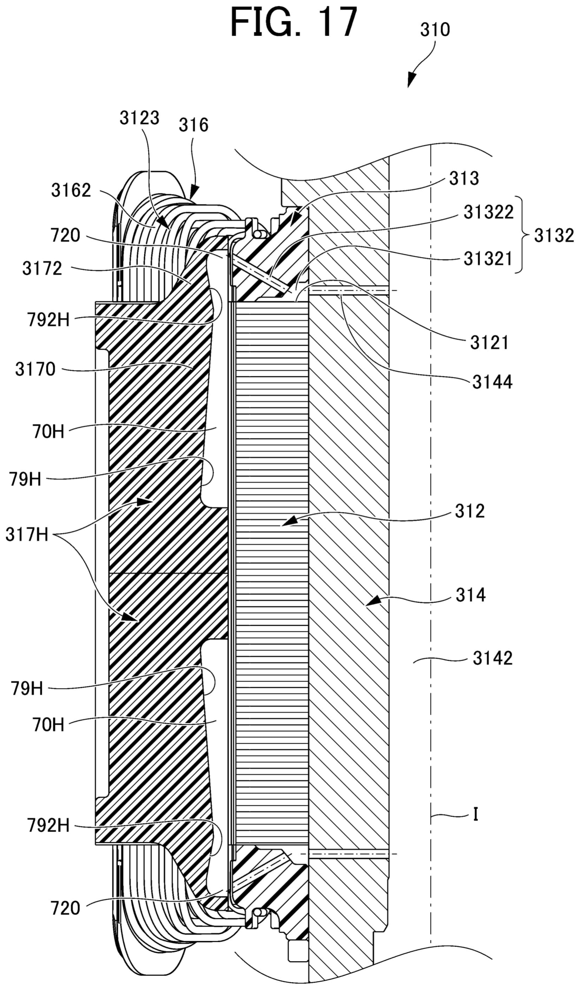

In the example shown in FIG. 17, a configuration is made in which an oil passage forming member 317H has the oil passage 70H, and in which the outwardly inclined portion 79H of the oil passage 70H is not formed in an oil passage section on the axially outer side. In this case, an inversely inclined portion 792H is formed in the oil passage section on the axially outer side. That is, inversely to the outwardly inclined portion 79H, the inclined portion 792H is directed to be located toward the radially inner side as it extends toward the center side in the axial direction. The oil passage 70H has the outwardly inclined portions 79H, whereby, also in this case, a difference in radial positions occurs at both axial end positions of the outwardly inclined portion 79H. That is, the radially outermost radial position of the oil passage 70H is located further toward the radially outer side, at an axial position of the outwardly inclined portion 79H on the center side in the axial direction (an example of the "second position") than at an axial position of the outwardly inclined portion 79H on the axially outer side (an example of the "first position"). Thus, also in this case, oil can be moved to the axially inner side by centrifugal force, due to the outwardly inclined portion 79H. Therefore, effects similar to those in the embodiment described above can be obtained. In addition, by providing the inversely inclined portion 792H, an oil reservoir portion for oil supplied from the inlet opening 720 can be formed. As a result, it is possible to prevent the oil from leaking from the oil passage 70H due to repulsion of the oil hitting a bottom wall (wall face on the radially outer side) of the oil passage 70H from the inlet opening 720.

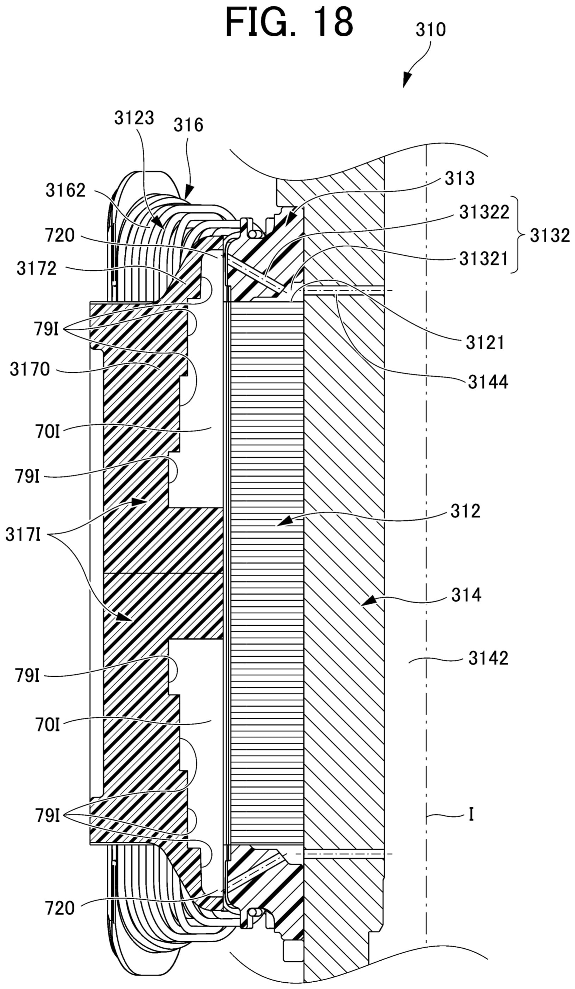

In the example shown in FIG. 18, a configuration is made in which an oil passage forming member 317I has the oil passage 70I, and in which the step portions 79I of the oil passage 70I are formed instead of an inclined portion. The oil passage 70I has the step portions 79I in a stepped shape, whereby, also in this case, differences in radial positions occur at both axial end positions of the step portions 79I. That is, the radially outermost radial position of the oil passage 70I is located further toward the radially outer side, at an axial position away from the step portion 79I toward the center side in the axial direction (an example of the "second position") than at an axial position away from the step portion 79I toward the axially outer side (an example of the "first position"). Thus, also in this case, oil can be moved to the axially inner side by centrifugal force, due to the differences in the radial positions occurring with the step portions 79I. Therefore, effects similar to those in the embodiment described above can be obtained. Note that, in the example shown in FIG. 18, the step portions 79I are formed at four locations for one oil passage forming member 317I, but the number of step portions 79I is freely set.

As shown in FIGS. 13 to 18, it is sufficient that in the oil passage, a wall face thereof on the radially outer side is formed with a section that is located further toward the radially outer side, on the center side in the axial direction than on the axially outer side, by an inclined portion or a step portion. Such a configuration can be obtained by a combination of various inclined portions and/or step portions.

Although each embodiment has been described in detail above, the present disclosure is not limited to a specific embodiment, and can be variously modified and changed within the scope of the claims. In addition, all or some of the constituent elements of the embodiment described above can also be combined.

For example, in the embodiment described above, the in-slot opening 710 is formed only on the trailing side, in the rotation direction of the rotor 310 at the time of forward movement, out of the side walls 3175 on both sides. However, the in-slot opening 710 may be formed only on the leading side in the rotation direction of the rotor 310 at the time of forward movement, or may be formed on both sides.

### REFERENCE SIGNS LIST

3: Rotating electrical machine (wound-field rotating electrical machine), 320: Stator, 310: Rotor, 312: Rotor core, 3121: Axial end face, 3122: Tooth portion, 3123: Slot, 313: End member, 3132: Oil passage (cooling medium supply structure), 316: Rotor winding (field winding), 317, 317A, 317B, 317C: Oil passage forming member (non-magnetic member), 70, 70B, 70C: Oil passage (cooling medium flow passage), 710: In-slot opening (first opening), 720, 720B: Inlet opening (second opening), and 8: Oil supply device (cooling medium supply system)

## Claims

1. A wound-field rotating electrical machine, comprising:
a stator; and
a rotor rotatably disposed coaxially with the stator with a gap in a radial direction between the rotor and the stator,
wherein
the rotor includes:
a rotor core including a plurality of tooth portions provided in a circumferential direction;
a field winding wound on the plurality of tooth portions; and
non-magnetic members extending in an axial direction, in a plurality of slots formed between the plurality of tooth portions,
each of the non-magnetic members includes a cooling medium flow passage extending in the axial direction,
the cooling medium flow passage has a first opening open in a direction intersecting the axial direction, in an axial range overlapping the rotor core as viewed in the radial direction,
the cooling medium flow passage has an inclined portion or a step portion between a first position in the axial direction and a second position, in the axial direction, that is closer to a center, in the axial direction, of the rotor core than the first position, and
the cooling medium flow passage has a radially outermost radial position that is located further toward a radially outer side, at the second position than at the first position, by the inclined portion or the step portion.

2. The wound-field rotating electrical machine according to claim 1, wherein
the cooling medium flow passage has a second opening open toward a radially inner side or an axially outer side, and
the second opening is located on the axially outer side relative to an axial end face of the rotor core.

3. The wound-field rotating electrical machine according to claim 2, further comprising:
an end member covering the axial end face of the rotor core in the axial direction; and
a cooling medium supply structure formed by the end member, the cooling medium supply structure being configured to supply a cooling medium to the cooling medium flow passage.

4. The wound-field rotating electrical machine according to any one of claims 1 to 3, wherein
the wound-field rotating electrical machine is a wound-field rotating electrical machine with which a vehicle is driven, and the rotor rotates to one side in the circumferential direction at a time when the vehicle moves forward, and
the first opening is open in a manner facing another side in the circumferential direction.
